# EUROPÄISCHE PATENTSCHRIFT

(11) **EP 1 317 369 B1**
(45) Veröffentlichungstag und Bekanntmachung des Hinweises auf die Patenterteilung: **06.04.2005**
(21) Anmeldenummer: 01982286.5
(22) Anmeldetag: 14.09.2001
(51) Int. Cl.: B61F 5/14, B61K 9/00, G01M 17/08

(54) **VERFAHREN UND VORRICHTUNG ZUR FEHLERÜBERWACHUNG VON KOMPONENTEN VON SCHIENENFAHRZEUGEN**
RAIL VEHICLE COMPONENT ERROR CONTROL METHOD AND DEVICE OF RAIL VEHICLES
PROCEDE ET DISPOSITIF POUR SURVEILLER LES DEFAILLANCES DE COMPOSANTS DE VEHICULES SUR RAILS

(30) Priorität: 15.09.2000 DE 10046521
(43) Veröffentlichungstag der Anmeldung: 11.06.2003
(73) Patentinhaber: DB Reise & Touristik AG, 60326 Frankfurt (DE)
(72) Erfinder: SÄGLITZ, Mario, 12163 Berlin (DE); GUO, Yong, 10587 Berlin (DE)
(74) Vertreter: Zinken-Sommer, Rainer
(86) Internationale Anmeldenummer: PCT/EP2001/010623
(87) Internationale Veröffentlichungsnummer: WO 2002/022424

(56) Entgegenhaltungen:
- WO-A-00/51868
- DE-A- 4 440 413
- DE-A- 19 836 081
- PATENT ABSTRACTS OF JAPAN vol. 018, no. 319 (M-1623), 17. Juni 1994 (1994-06-17) & JP 06 072328 A (EAST JAPAN RAILWAY CO;OTHERS: 01), 15. März 1994 (1994-03-15)

## Beschreibung

Die Erfindung betrifft ein Verfahren und eine Vorrichtung zur Fehlerüberwachung von Komponenten von Schienenfahrzeugen.

Es ist bekannt, dass beim bestimmungsgemäßen Einsatz von Schienenfahrzeugen das Fahrwerk der Schienenfahrzeuge einen so genannten Sinus-Lauf erfährt. Hierbei wird das Fahrwerk abhängig von der Fahrgeschwindigkeit aufgrund einwirkender äußerer Einflüsse und selbsttätiger Rückstellkraft seitlich zur Fahrtrichtung ausgelenkt. Um eine Stabilisierung des Fahrwerks zu erreichen, ist bekannt, dass - insbesondere bei Hochgeschwindigkeitszügen - die Wagenkästen über so genannte Schlingerdämpfer mit dem Drehgestellrahmen verbunden sind. Diese Schlingerdämpfer dienen der Fahrstabilisierung, insbesondere der Unterdrückung des so genannten Sinus-Laufes.

Zur Erhöhung des Fahrkomforts beziehungsweise zur Gewährleistung einer notwendigen Fahrsicherheit sind den Wagenkästen in Fahrtrichtung links und rechts angeordnete Schlingerdämpfer zugeordnet, die eine im Wesentlichen gleiche Schlingerdämpferkraft aufbringen müssen. Abweichungen der Schlingerdämpferkräfte der links beziehungsweise rechts angeordneten Schlingerdämpfer führen zu einer verminderten Kompensation des Sinus-Laufes und somit zu einer Verringerung der Fahrstabilität des Schienenfahrzeuges.

Die Schlingerdämpfer stützen sich einerseits an am Wagenkasten befestigten Schlingerdämpferkonsolen und andererseits an einem Drehgestellrahmen ab. Ferner ist bekannt, zwischen den Drehgestellen und den Wagenkasten ein Feder-/Dämpfersystem (sekundäres Feder-/Dämpfersystem) anzuordnen. Dieses wird bei Hochgeschwindigkeitszügen üblicherweise von einem Luftbalg gebildet, über den der Wagenkasten auf den Drehgestellen aufliegt.

Es ist allgemein bekannt, während des Einsatzes von Schienenfahrzeugen auf einzelne Komponenten des Schienenfahrzeuges einwirkende Schwingungen oder dergleichen mittels Beschleunigungsaufnehmern zu erfassen und die von den Beschleunigungsaufnehmern gelieferten Signale zu einer Onboard-Diagnose auszuwerten. Beispielsweise seien hier die DE 195 02 670 A1 und DE 198 27 271 A1 genannt.

Aus der WO 99/54704 ist ein System zur Überwachung von Schlingerdämpfern bekannt. Hierbei werden den Schlingerdämpfern jeweils Kraftsensoren zugeordnet, deren Signale ausgewertet werden. Ferner wird vorgeschlagen, am Drehgestellrahmen Beschleunigungssensoren anzuordnen, deren Sensierrichtung mit der Längsachse der Schlingerdämpfer zusammenfällt.

Ferner ist aus der allgemeinen Messtechnik eine Korrelationsanalyse von Signalen bekannt.

Der Erfindung liegt die Aufgabe zugrunde, ein Verfahren und eine Vorrichtung der gattungsgemäßen Art zu schaffen, mittels denen in einfacher Weise eine Fehlerüberwachung von Komponenten von Schienenfahrzeugen möglich ist.

Erfindungsgemäß wird diese Aufgabe durch ein Verfahren mit den im Anspruch 1 genannten Merkmalen gelöst. Dadurch, dass das Beschleunigungsverhalten von wenigstens zwei, einem Wagenkasten des Schienenfahrzeuges zugeordneten Schlingerdämpferkonsolen überwacht wird, indem die Beschleunigungswerte von vorzugsweise in Fahrtrichtung des Schienenfahrzeuges links und rechts des Wagenkastens angeordneten Schlingerdämpferkonsolen einerseits korreliert werden, und ein Korrelationskoeffizient mit wenigstens einem Schwellwert verglichen wird und bei Überschreiten des wenigstens einen Schwellwertes eine Alarmmeldung ausgelöst wird, und andererseits die Beschleunigungswerte einzeln einer Signalanalyse, bevorzugt einem Vergleich mit wenigstens einem Referenzmuster, unterzogen werden, ist vorteilhaft möglich, gezielt mehrere Komponenten des Schienenfahrzeuges zu überwachen.

So können zum einen durch die Korrelationsanalyse frühzeitig eventuelle Alterungserscheinungen und/oder Fehler an den Schlingerdämpfern erkannt werden. Zum anderen lassen sich durch das individuelle Überwachen des Beschleunigungsverhaltens der Schlingerdämpferkonsolen die Befestigungen und der Zustand der Schlingerdämpferkonsolen am Wagenkasten überprüfen. Die Schlingerdämpferkonsolen sind mit dem Wagenkasten kraftschlüssig verbunden, so dass diese keinerlei Relativbewegungen zueinander erfahren. Bei alterungsbedingter und/oder aufgrund äußerer mechanischer Einflüsse bedingter Beeinträchtigung der kraftschlüssigen Verbindung zwischen Schlingerdämpferkonsole und Wagenkasten kann es zu Relativbewegungen der Schlingerdämpferkonsole und Wagenkasten zueinander kommen. Diese gegebenenfalls auch geringfügigen Relativbewegungen von Schlingerdämpferkonsole und Wagenkasten zueinander führen zu einer Veränderung des Beschleunigungsverhaltens der die defekte Befestigung aufweisenden Schlingerdämpferkonsole. Durch Vergleich des Beschleunigungsverhaltens der Schlingerdämpferkonsole mit einem Referenzmuster oder dem Beschleunigungsverhalten der wenigstens einen weiteren Schlingerdämpferkonsole wird die Veränderung des Beschleunigungsverhaltens detektiert, so dass auf einen Fehler der Befestigung erkannt werden kann.

Schließlich ist zum Weiteren gleichzeitig die Überwachung des sekundären Feder-/Dämpfersystems zwischen Wagenkasten und Drehgestellen möglich. Dieses sekundäre Feder-/Dämpfersystem zwischen Wagenkasten und Drehgestellen führt zu einem gewollten gedämpften Schwingungsverhalten des Wagenkastens und beeinflusst auch das Beschleunigungsverhalten der Schlingerdämpferkonsolen, die am Wagenkasten befestigt sind. Ein Fehler im sekundären Feder-/Dämpfersystem zwischen Wagenkasten und Drehgestellen führt zu einem veränderten Schwingungsverhalten des Wagenkastens, das somit zu einem veränderten Schwingungsverhalten der Schlingerdämpferkonsolen führt. Somit kann über ein verändertes Beschleunigungsverhalten der Schlingerdämpferkonsolen sehr vorteilhaft gleichzeitig das sekundäre Feder-/Dämpfersystem zwischen Wagenkasten und Drehgestellen überwacht werden.

Nach allem wird deutlich, dass durch einfache Überwachung des Beschleunigungsverhaltens der Schlingerdämpferkonsolen gleichzeitig eine Vielzahl von Komponenten des Schienenfahrzeuges, insbesondere der Schlingerdämpfer, der Schlingerdämpferkonsolen und des sekundären Feder-/Dämpfersystems zwischen Wagenkasten und Drehgestellen, überwacht werden.

Bei der erfindungsgemäß vorgesehenen Überwachung wird ausgenutzt, dass zur Dämpfung des Sinus-Laufes des Fahrwerks die links und rechts angeordneten Schlingerdämpfer entgegengesetzte Dämpferkräfte erzeugen, die die entsprechende Auslenkung der beiden Schlingerdämpferkonsolen hervorrufen. Kommt es zu einer Änderung des Betrages und der Richtung der Auslenkung einer Schlingerdämpferkonsole, relativ zu der Auslenkung der anderen Schlingerdämpferkonsole, oder zu Referenzmustern kann auf einen Fehler mindestens eines Schlingerdämpfers, der Schlingerdämpferkonsole selber oder des sekundären Feder-/Dämpfersystems zwischen Wagenkasten und Drehgestellen geschlossen werden. Mittels der Schwingungsanalyse, insbesondere der Korrelationsanalyse, lassen sich die von den jeweils zugeordneten linken und rechten Schlingerdämpferkonsolen gelieferten Beschleuhigungssignale in einfacher und sicherer Weise auswerten. Durch Festlegung des wenigstens einen Schwellwertes und/oder des wenigstens einen Referenzmusters kann ein Fehler frühzeitig erkannt werden, so dass rechtzeitig Maßnahmen, beispielsweise Austausch oder Reparatur des betroffenen Schlingerdämpfers und/oder der betroffenen Schlingerdämpferkonsole und/oder des betroffenen sekundären Feder-/Dämpfersystems, eingeleitet werden können.

In bevorzugter Ausgestaltung der Erfindung ist vorgesehen, dass die Korrelationsanalyse der von den beiden - linken und rechten - Schlingerdämpferkonsolen gelieferten Beschleunigungswerte in aufeinander folgenden Zeitfenstern überwacht wird. Hierdurch lässt sich vorteilhaft die Korrelationsanalyse mit Beginn jedes Zeitfensters neu starten. Ferner ist bevorzugt, wenn die Breite des Zeitfensters geschwindigkeitsabhängig variiert wird. Hierdurch lässt sich die Genauigkeit der Korrelationsanalyse bei niedrigen Geschwindigkeiten erhöhen. Bei höheren Geschwindigkeiten der Schienenfahrzeuge wird die Breite der Zeitfenster bevorzugt verringert, um eine schnelle Auswertung und damit kurze Reaktionszeiten zu gewährleisten.

In weiterer bevorzugter Ausgestaltung der Erfindung ist vorgesehen, dass die Korrelationsanalyse der wenigstens zwei Signale mit überlappenden Zeitfenstern durchgeführt wird. Hierdurch wird erreicht, dass eine fortlaufende Überwachung sichergestellt ist, so dass auch plötzlich auftretende Beschädigungen unmittelbar erkannt werden können. Die Überlappung der Zeitfenster sichert, dass bei gleich langem Reaktionszeitintervall mehr Messdaten ausgewertet werden können.

In weiterer bevorzugter Ausgestaltung der Erfindung ist vorgesehen, dass die innerhalb eines Zeitfensters gelieferten Signale mit einer Abtastfrequenz- abgetastet werden, die vorzugsweise variabel einstellbar ist. Hierdurch wird möglich, die Abtastrate dem Frequenzbereich des Schwingungsverhaltens der Schlingerdämpferkonsolen, gegebenenfalls geschwindigkeitsabhängig, anzupassen. Die Genauigkeit der Überwachung wird somit erhöht.

Ferner ist in bevorzugter Ausgestaltung der Erfindung vorgesehen, dass bei Bedarf einzelne Messwerte innerhalb eines Zeitfensters down-gesampelt werden und dieser down-gesampelte Wert der Korrelationsanalyse zugeführt wird. Hierdurch lässt sich der Aufwand der Korrelationsanalyse unter Beibehaltung der Genauigkeit reduzieren.

Erfindungsgemäß wird die Aufgabe ferner durch eine Vorrichtung mit den im Anspruch 12 genannten Merkmalen gelöst. Dadurch, dass Mittel zum Erfassen des Beschleunigungsverhaltens von wenigstens zwei, einem Wagenkasten des Schienenfahrzeuges zugeordneten Schlingerdämpferkonsolen vorgesehen sind, die mit Mitteln zusammenarbeiten, mittels denen die Beschleunigungswerte von in Fahrtrichtung des Schienenfahrzeuges links und rechts des Wagenkastens angeordneten Schlingerdämpferkonsolen einerseits korreliert werden, und ein Korrelationskoeffizient mit wenigstens einem Schwellwert vergleichbar ist und bei überschreiten des wenigstens einen Schwellwertes eine Alarmmeldung auslösbar ist, und andererseits individuell einer Signalanalyse unterzogen werden, lässt sich in einfacher Weise eine Vorrichtung bereitstellen, mittels der eine effiziente Überwachung des Fahrverhaltens von Schienenfahrzeugen möglich ist. Insbesondere kann in bevorzugter Ausgestaltung vorgesehen sein, dass eine Auswerteeinrichtung in jedem Schienenfahrzeug oder vorzugsweise bei einem Zugverband aus mehreren Schienenfahrzeugen einem der Schienenfahrzeuge des Zugverbandes zugeordnet ist. Hierdurch lässt sich die Überwachung für mehrere Schienenfahrzeuge in einfacher Weise gleichzeitig durchführen.

Die Erfindung ermöglicht insbesondere eine zustandsbezogene Instandhaltung der Schlingerdämpfer, der Schlingerdämpferkonsolen und des sekundären Feder-/Dämpfersystems zwischen Wagenkasten und Drehgestellen. Das Überwachungsverfahren kann insbesondere kontinuierlich während des Einsatzes der Schienenfahrzeuge durchgeführt werden. Das Verfahren lässt sich in einfacher Weise in eine Onboard-Diagnose der Schienenfahrzeuge integrieren.

Weitere bevorzugte Ausgestaltungen der Erfindung ergeben sich aus den übrigen, in den Unteransprüchen genannten Merkmalen.

Die genannte Überwachung der Schlingerdämpferkonsolen, der Schlingerdämpfer und/oder der sekundären Feder-/Dämpfersysteme ist beispielhaft. So können in einfacher Weise ohne grundsätzliche Änderung das Verfahren und/oder die Vorrichtung zur Überwachung weiterer Komponenten des Schienenfahrzeuges auf zu Sinus-Lauf führenden Fahrwerksschäden, beispielsweise auf veränderte Radkonizität, eingesetzt werden.

Die Erfindung wird nachfolgend in einem Ausführungsbeispiel anhand der zugehörigen Zeichnungen näher erläutert. Es zeigen:
- Figur 1: eine schematische Ansicht eines Schienenfahrzeuges;
- Figur 2: eine schematische Perspektivansicht eines Laufdrehgestelles eines Schienenfahrzeuges;
- Figur 3: eine schematische Draufsicht auf ein Schienenfahrzeug;
- Figur 3a: einen Sinus-Lauf eines Drehgestells;
- Figur 4: ein Blockschaltbild des erfindungsgemäßen Verfahrens zum Überwachen des Fahrverhaltens des Schienenfahrzeuges und
- Figuren 5 und 6: Kennlinien zum Vergleich von intakten Schljngerdämpfern und ausgefallenen Schlingerdämpfern.

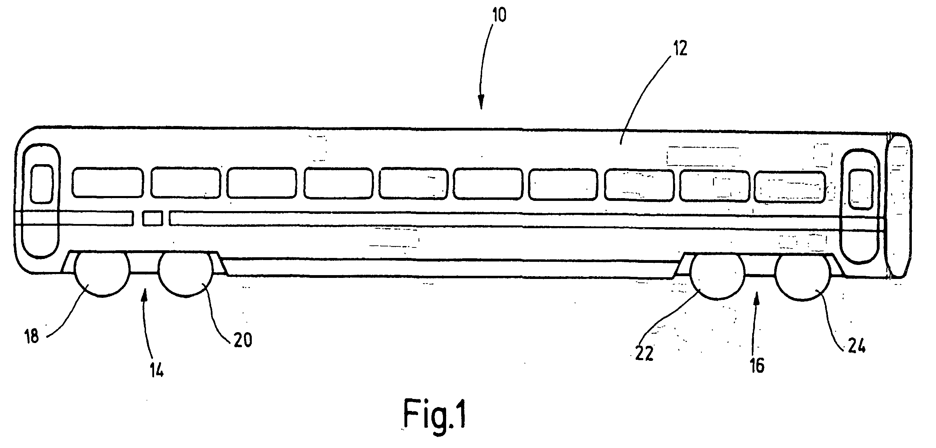

Figur 1 zeigt schematisch ein Schienenfahrzeug 10. Bei dem hier dargestellten Schienenfahrzeug 10 handelt es sich um einen Mittelwagen eines Hochgeschwindigkeitszuges. Die Erfindung wird lediglich beispielhaft anhand dieses Mittelwagens erläutert. Selbstverständlich lässt sich die Erfindung ohne weiteres auf andere Schienenfahrzeuge, beispielsweise Triebfahrzeuge, Steuerwagen, Güterwagen oder dergleichen, übertragen.

Das Schienenfahrzeug 10 umfasst einen Wagenkasten 12, der auf zwei Laufdrehgestellen 14, 16 gelagert ist. Die Laufdrehgestelle 14 und 16 umfassen jeweils Radsätze 18, 20, 22 und 24. Der allgemeine Aufbau derartiger Schienenfahrzeuge 10, insbesondere die Ankopplung des Wagenkastens 12 an die Laufdrehgestelle 14 und 16 beziehungsweise die Lagerung der Radsätze 18, 20, 22, und 24 an den Laufdrehgestellen 14 und 16 über primäre beziehungsweise sekundäre Feder-/Dämpfersysteme, sind allgemein bekannt, so dass hierauf im Einzelnen im Rahmen der vorliegenden Beschreibung nicht näher eingegangen werden soll.

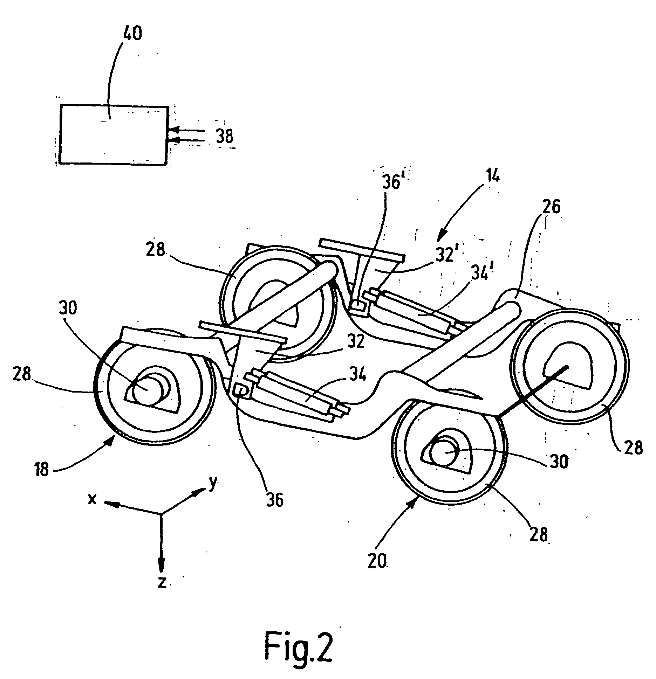

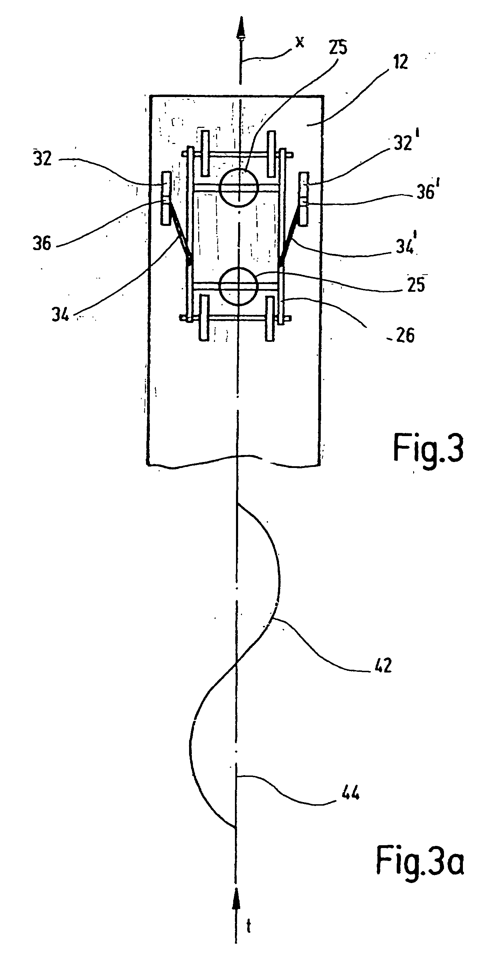

Figur 2 zeigt schematisch eine Perspektivansicht eines Laufdrehgestelles 14. Das Laufdrehgestell 14 umfasst einen Drehgestellrahmen 26, der über in Figur 1 nicht dargestellte sekundäre Feder-/Dämpfersysteme (Luftbälge) 25 (Figur 3) mit dem Wagenkasten (Figur 1) verbunden ist. An dem Drehgestellrahmen 26 sind über ebenfalls nicht dargestellte primäre Feder-/Dämpfersysteme die Radsätze 18 und 20 angeordnet. Die Radsätze 18 und 20 besitzen Räder 28, die über Radlager 30 gelagert sind. Ferner sind Schlingerdämpferkonsolen 32 erkennbar, die am Wagenkasten 12 (Figur 1) beispielsweise kraftschlüssig befestigt sind. Die Schlingerdämpferkonsolen 32 sind über Schlingerdämpfer 34 mit dem Drehgestellrahmen 26 verbunden.

Während des Einsatzes des Schienenfahrzeuges 10 rollen die Radsätze 18, 20 über einen Fahrweg. Je nach Fahrgeschwindigkeit und Zustand des Fahrweges erfährt das Schienenfahrzeug 10 eine Schwingungsanregung. Diese Schwingungsanregung führt zu einem Schwingungsverhalten einzelner Komponenten des Schienenfahrzeuges 10. Entsprechend der Schwingungsanregung, die insbesondere abhängig von einer Geschwindigkeit des Schienenfahrzeuges 10 und/oder einem Zustand des Fahrweges ist, erfahren die Komponenten des Schienenfahrzeuges 10 eine Beschleunigung in den drei Raumrichtungen, also in x-Richtung, y-Richtüng und z-Richtung. Hierdurch kommt es unter anderem zu einem so genannten Sinus-Lauf des Fahrwerks in Fahrtrichtung, also gemäß dem Beispiel in x-Richtung. Dieser Sinus-Lauf wird durch die Schlingerdämpfer 34, die einerseits am Wagenkasten 12 und andererseits am Drehgestellrahmen 26 befestigt sind, gedämpft. Hierbei ist in Fahrtrichtung (x-Richtung) ein links angeordneter Schlingerdämpfer 34 und ein rechts angeordneter Schlingerdämpfer 34' dargestellt.

Gegenstand der Erfindung ist das Erfassen und Auswerten von auf die Schlingerdämpferkonsolen 32 und 32', vorzugsweise in Fahrtrichtung (x-Richtung), einwirkende Beschleunigungen.

Hierzu sind den Schlingerdämpferkonsolen 32 jeweils schematisch angedeutete Schwingungsaufnehmer 36 zugeordnet. Die Schwingungsaufnehmer 36 sind beispielsweise von Beschleunigungssensoren gebildet, die beispielsweise eine in x-Richtung - und entgegengesetzt - wirkende Beschleunigung auf die Schlingerdämpferkonsolen 32 detektieren.

Die von den Beschleunigungssensoren 36, 36' gelieferten Signale 38 werden einer in Figur 2 lediglich schematisch dargestellten Auswerteschaltung 40, die fahrzeuggebunden und/oder zuggebunden angeordnet sein kann, zugeführt. Anhand der von den Beschleunigungssensoren 36 gelieferten Signale 38 wird ein Beschleunigungsverhalten der Schlingerdämpferkonsolen 32 beziehungsweise 32' detektiert, um - wie nachfolgend noch erläutert wird - die Schädigung beziehungsweise den Ausfall eines der Schlingerdämpfer 34 beziehungsweise 34', die Schädigung der Befestigung der Schlingerdämpferkonsolen 32, 32' am Wagenkasten und/oder des sekundären Feder-/Dämpfersystems 25 zu erkennen.

Figur 3 zeigt in einer schematischen Draufsicht die Ankopplung des Wagenkastens 12 über die Schlingerdämpfer 34 beziehungsweise 34' und die sekundären Feder-/Dämpfersysteme 25 an den Drehgestellrahmen 26. Anhand von Figur 3a soll verdeutlicht werden, dass das Fahrwerk bei Bewegung des Schienenfahrzeuges 10 in Fahrtrichtung (x-Richtung) einen hier angedeuteten Sinus-Lauf 42 erfährt. Um die Amplitude des Sinus-Laufes 42 möglichst gering zu halten, sind die Schlingerdämpfer 34 beziehungsweise 34' vorgesehen. Dies dient einer Fahrstabilisierung des Schienenfahrzeuges 10. Anhand des Sinus-Laufes 42 wird deutlich, je nachdem, ob das Fahrwerk in Fahrtrichtung (x-Richtung) nach rechts beziehungsweise nach links von einer hier angedeuteten Fahrzeuglängsachse 44 auslenkt, dass der Schlingerdämpfer 34 gestaucht und der Schlingerdämpfer 34' gestreckt beziehungsweise der Schlingerdämpfer 34 gestreckt und der Schlingerdämpfer 34' gestaucht wird. Entsprechend dieser Stauchbeziehungsweise Streckbewegung der Schlingerdämpfer 34, 34' wird auf die Schlingerdämpferkonsolen 32 beziehungsweise 32' und somit auf die auf diesen angeordneten Beschleunigungsaufnehmern 36 beziehungsweise 36' eine positive beziehungsweise negative Beschleunigung ausgeübt. Diese positive beziehungsweise negative Beschleunigung aufgrund des Sinus-Laufes 42 wird während des bestimmungsgemäßen Einsatzes der Schienenfahrzeuge 10 von der Gesamtbeschleunigung beziehungsweise Gesamtverzögerung des Schienenfahrzeuges 10 und dem Dämpfungsverhalten der sekundären Feder-/Dämpfersysteme 25 überlagert. Für die nachfolgende Erläuterung der Erfindung wird davon ausgegangen, dass die von den Beschleunigungsaufnehmern 36 beziehungsweise 36' gelieferten Signale 38 sich auf den Sinus-Lauf 42 und somit auf die Stauch- beziehungsweise Streckbewegung der Schlingerdämpfer 34 beziehungsweise 34' beziehen.

Anhand der Erläuterungen wird deutlich, dass bei fehlerfreien Schlingerdämpfern 34 beziehungsweise 34' und fehlerfreier Befestigung der Schlingerdämpferkonsolen 32, 32' am Wagenkasten 12 und fehlerfreien sekundären Feder-/Dämpfersystemen 25 die von den Beschleunigungsaufnehmern 36 beziehungsweise 36' gelieferten Signale 38 beziehungsweise 38' teilweise mit entgegengesetzten Vorzeichen aufgrund des Sinus-Laufes und teilweise mit gleichen Vorzeichen aufgrund der Gesamtbeschleunigung beziehungsweise Gesamtverzögerung des Wagenkastens überlagert sind. Der Wert der Beschleunigungssignale 38 und 38', beispielsweise eine Spannungshöhe, hängt von der momentanen Amplitude des Sinus-Laufes 42 ab. Somit ist jedem Zeitpunkt tₙ des Sinus-Laufes 42 genau ein Signal 38 des Schlingerdämpfers 34 und ein Signal 38' des Schlingerdämpfers 34' zuordbar. Über eine Zeitspanne, nachfolgend auch Zeitfenster genannt, t₁ - t₂ liegen somit eine entsprechende Anzahl von Werten des Beschleunigungssensors 36 und des Beschleunigungssensors 36' vor. Entsprechend einer festlegbaren Abtastfrequenz f_{A} kann die Anzahl der Werte pro Zeitspanne t₁ bis t₂ variiert werden.

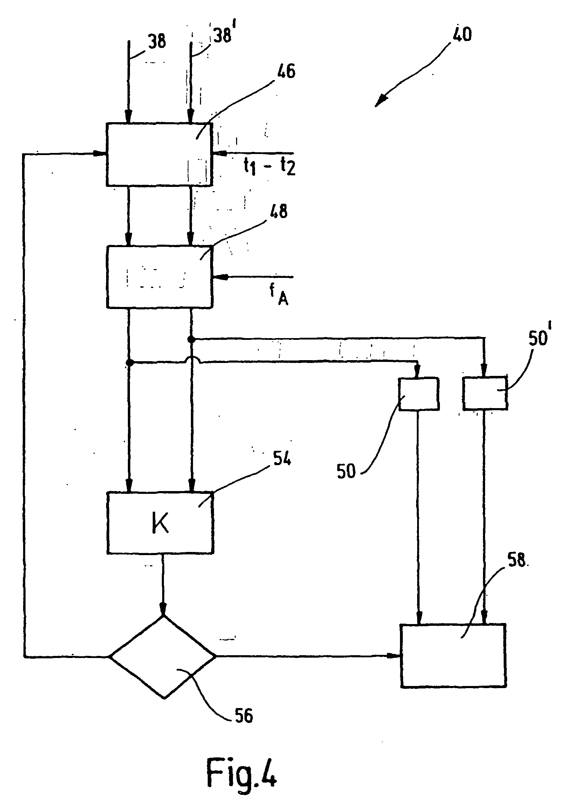

Figur 4 verdeutlicht in einem Blockschaltbild den Aufbau der Auswerteschaltung 40. Es wird deutlich, dass die Signale 38 und 38' zunächst einem Zeitfensterglied 46 zugeführt werden. Mittels des Zeitfenstergliedes 46 kann die Zeitspanne t₁ - t₂ vorgegeben werden, die das Zeitfenster definiert, innerhalb dem die Auswertung der Signale 38 und 38' erfolgt. Durch einen im Einzelnen nicht dargestellten Trigger kann das Zeitfenster überlappend, vorzugsweise mit einer Überlappung von 50 %, erneut gestartet werden. Das bedeutet, wenn die Zeitspanne t₁ - t₂ zur Hälfte abgelaufen ist, wird erneut ein Auswertealgorithmus gestartet.

Die Signale 38 und 38' werden nachfolgend einem Abtastglied 48 zugeführt, bei dem die Signale mit einer Abtastfrequenz f_{A}, die beispielsweise zwischen 10 und 50 Hz liegt, abgetastet werden. Da die Frequenz f des Sinus-Laufes 42 relativ niedrig ist, wird die Abtastfrequenz f_{A} ebenfalls relativ niedrig gewählt. Durch die Abtastung stehen pro Zeitspanne t₁ - t₂ eine entsprechende Anzahl von Einzelwerten der Signale 38 beziehungsweise 38' zur Verfügung.

In einem Korrelationsglied 54 erfolgt anschließend eine Korrelationsanalyse der Einzelwerte der Signale 38 beziehungsweise 38' innerhalb einer Zeitspanne t₁ - t₂. Die Korrelationsanalyse wirft einen Korrelationskoeffizienten K aus, der einem Vergleicher 56 zugeführt wird. Der Korrelationskoeffizient K wird bei intakten Schlingerdämpfern 34 und 34' bei intakter Befestigung der Schlingerdämpferkonsolen 32, 32' am Wagenkasten 12 und bei intakten sekundären Feder-/Dämpfersystemen 25 um den Wert 0 schwanken, da - wie bereits erläutert - aufgrund des Sinus-Laufes 42 die Schlingerdämpfer 34 beziehungsweise 34' mit entgegengesetzten Vorzeichen und die Gesamtbeschleunigung beziehungsweise Gesamtverzögerung des Wagenkastens mit gleichen Vorzeichen gestaucht beziehungsweise gestreckt werden. Ist einer der Schlingerdämpfer 34, 34' defekt, hat dies Einfluss auf den Sinus-Lauf 42. Das heißt, der Sinus-Lauf 42 wird in seiner Amplitude - gemäß der Darstellung in Figur 3a - nach rechts beziehungsweise nach links verstärkt und ist damit dominierend. Dies führt zu in jeweils einander entgegengesetzter Richtung verstärkter Stauchung beziehungsweise Streckung der Schlingerdämpfer 34 beziehungsweise 34'. Der Korrelationskoeffizient K nimmt daher in diesem Fall Werte in Richtung -1 an. Überschreitet der Korrelationskoeffizient K eine vorgebbare Schwelle, beispielsweise von -0,4, wird über den Vergleicher 56 eine Alarmmeldung 58 ausgelöst. Diese Alarmmeldung 58 kann beispielsweise darin bestehen, dass bei einer nächsten Wartung die Schlingerdämpfer 34 beziehungsweise 34', die Schlingerdämpferkonsolen 32, 32' und die sekundären Feder-/Dämpfersysteme 25 überprüft und gegebenenfalls repariert oder ausgetauscht werden. Je nach Höhe des Korrelationskoeffizienten K beziehungsweise je nach Häufigkeit der Überschreitung des Schwellwertes kann eine unterschiedliche Alarmmeldung 58 ausgeworfen werden. Diese kann beispielsweise darin bestehen, dass eine maximale Fahrgeschwindigkeit des Schienenfahrzeuges 10 nicht mehr überschritten werden darf, da eine Fahrstabilität ab einer bestimmten Geschwindigkeit nicht mehr gewährleistet ist. Da der Sinus-Lauf 42 bei geringen Fahrgeschwindigkeiten nicht beziehungsweise nur wenig ausgeprägt auftritt, kann durch Begrenzung der Höchstgeschwindigkeit bei Fehlermeldung eine gefahrlose Fortsetzung einer Fahrt des Schienenfahrzeuges 10 erfolgen.

Wie Figur 4 weiter verdeutlicht, werden die Signale 38 und 38' jeweils individuell einer Signalanalyse 50 beziehungsweise 50' unterzogen. Diese Signalanalyse 50 beziehungsweise 50' kann insbesondere in dem Vergleich mit wenigstens einem abgelegten Referenzmuster bestehen. Diese Referenzmuster können beispielsweise aus normalen Betriebszuständen des Schienenfahrzeuges gelernt werden. Ergibt der individuelle Vergleich eine signifikante Abweichung des Signales 38 oder des Signales 38' von dem wenigstens einen Referenzmuster, kann ebenfalls die Alarmmeldung 58 generiert werden. Durch diese zusätzliche individuelle Auswertung der Signale 38 und 38', das heißt zusätzlich zur Korrelationsanalyse, wird die Diagnosetiefe erhöht. Durch die individuelle zusätzliche Auswertung der Signale 38 und 38' kann insbesondere auf nicht den Sinus-Lauf des Schienenfahrzeuges beeinflussende Störungen, beispielsweise am sekundären Feder-/Dämpfersystem 25, geschlossen werden.

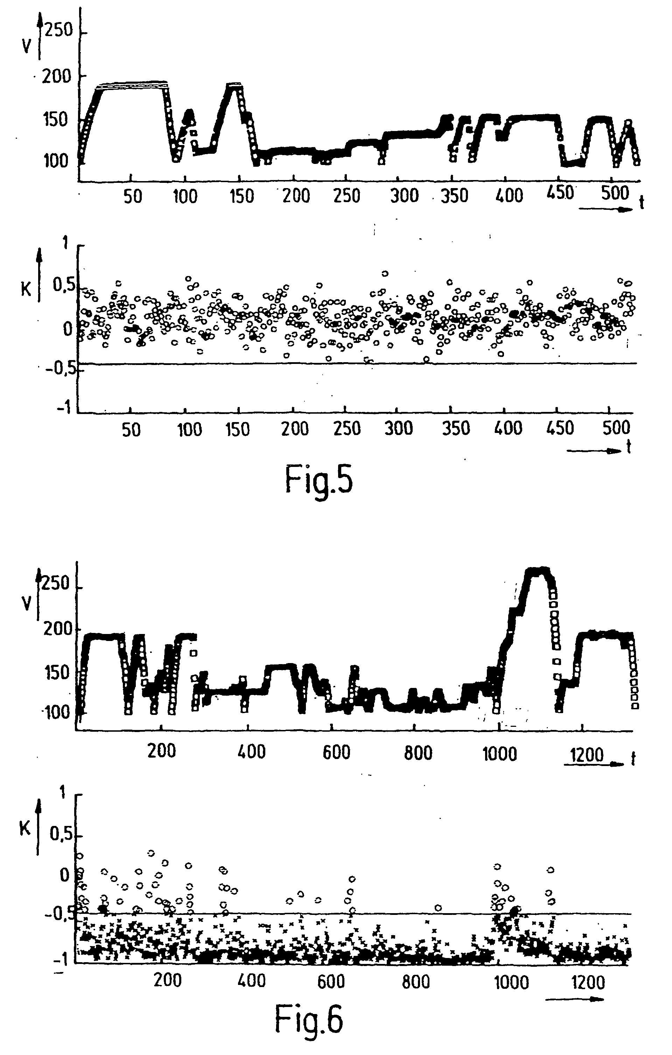

In den Figuren 5 und 6 sind zur Verdeutlichung des erfindungsgemäßen Verfahrens verschiedene Kennlinien aufgetragen. Hierbei ist einerseits jeweils die Geschwindigkeit v des Schienenfahrzeuges 10 über der Zeit und der ermittelte Korrelationskoeffizient K über der Zeit aufgetragen. Figur 5 verdeutlicht hierbei eine Messfahrt ohne Fehler beziehungsweise Defekte. Es wird deutlich, dass die Korrelationskoeffizienten K jeweils über dem festgelegten Schwellwert von -0,4 liegen.

Zum Vergleich ist eine Messfahrt mit einem defekten Schlingerdämpfer 34 in Figur 6 dargestellt. Hierbei ist ebenfalls wieder die Geschwindigkeit v über der Zeit t aufgetragen, wobei zur sicheren Verifizierung mehrmalige, zum Teil abrupte Geschwindigkeitsänderungen des Schienenfahrzeuges 10 erfolgten. Es wird deutlich, dass die Mehrzahl der Korrelationskoeffizienten K unterhalb des Schwellwertes -0,4 liegen. Die Hauptzahl der Korrelationskoeffizienten K geht in Nähe des Wertes -1. Dies verdeutlicht, dass die vorgesehene Korrelationsanalyse geeignet ist, defekte Schlingerdämpfer 34 beziehungsweise 34' sicher zu erkennen.

Für das erfindungsgemäße Verfahren können beispielsweise folgende Parameter gewählt werden. Die Zeitspanne t₁ - t₂ (Zeitfenster) kann beispielsweise zwischen 3 und 20 Sekunden betragen. Der Überdeckungsgrad der aufeinander folgenden Zeitfenster kann beispielsweise zwischen 0 und 50 % betragen. Die Abtastfrequenz f_{A} kann beispielsweise zwischen 10 und 50 Hz betragen, während der Schwellwert des Korrelationskoeffizienten K beispielsweise zwischen -0,4 und -0,6 liegen kann.

Nach weiteren nicht dargestellten Ausführungsbeispielen kann auch die Befestigung der Schlingerdämpferkonsolen 32, 32' am Wagenkasten 12, der Zustand der Schlingerdämpferkonsolen 32, 32' selber (Rissbildung) und die sekundären Feder-/Dämpfersysteme 25 überprüft werden.

### Bezugszeichenliste

- 10: Schienenfahrzeug
- 12: Wagenkasten
- 14,16: Laufdrehgestelle
- 18,20,22,24: Radsätze
- 25: sekundäre Feder-/Dämpfersysteme
- 26: Drehgestellrahmen
- 28: Räder
- 30: Radlager
- 32,32': Schlingerdämpferkonsolen
- 34,34': linker und rechter Schlingerdämpfer
- 36,36': Beschleunigungssensoren
- 38,38': Beschleunigungssignale
- 40: Auswerteschaltung
- 42: Sinus-Lauf
- 44: Fahrzeuglängsachse
- 46: Zeitfensterglied
- 48: Abtastglied
- 50,50': Signalanalyse
- 54: Korrelationsglied
- 56: Vergleicher
- 58: Alarmmeldung

- tₙ: Zeitpunkt
- t₁ - t₂: Zeitspanne (Zeitfenster)
- f_{A}: Abtastfrequenz
- K: Korrelationskoeffizient
- v: Geschwindigkeit

## Patentansprüche

1. Verfahren zur Fehlerüberwachung von Schlingerdämpfern eines Schienenfahrzeuges, wobei das Beschleunigungsverhalten von wenigstens zwei, einem Wagenkasten (12) des Schienenfahrzeuges (10) zugeordneten Schlingerdämpferkonsolen (32, 32') überwacht wird, wobei die Beschleunigungswerte einzeln einer Signalanalyse (50, 50') unterzogen werden, **dadurch gekennzeichnet, daß** die Beschleunigungswerte von in Fahrtrichtung des Schienenfahrzeuges (10) links und rechts des Wagenkastens (12) angeordneten Schlingerdämpferkonsolen (32, 32') einerseits korreliert werden, und daß ein sich daraus ergenbender Korrelationskoeffizient (K) mit wenigstens einem Schwellwert verglichen wird und bei Überschreiten des wenigstens einen Schwellwertes eine Alarmmeldung (58) ausgelöst wird.

2. Verfahren nach Anspruch 1, **dadurch gekennzeichnet, dass** die Korrelationsanalyse in aufeinander folgenden Zeitfenstern (t₁ - t₂) erfolgt.

3. Verfahren nach einem der vorhergehenden Ansprüche, **dadurch gekennzeichnet, dass** die Korrelationsanalyse in überlappenden Zeitfenstern (t₁ - t₂) erfolgt.

4. Verfahren nach Anspruch 3, **dadurch gekennzeichnet, dass** ein Überlappungsgrad zwischen 0 und 50 % beträgt.

5. Verfahren nach einem der vorhergehenden Ansprüche, **dadurch gekennzeichnet, dass** die Signale (38, 38') innerhalb der Zeitfenster (t₁ - t₂) mit einer Abtastfrequenz (f_{A}) abgetastet werden.

6. Verfahren nach Anspruch 5, **dadurch gekennzeichnet, dass** die Abtastfrequenz (f_{A}) veränderbar ist.

7. Verfahren nach einem der vorhergehenden Ansprüche, **dadurch gekennzeichnet, dass** das Zeitfenster (t₁ - t₂) zwischen 3 und 20 Sekunden beträgt.

8. Verfahren nach einem der vorhergehenden Ansprüche, **dadurch gekennzeichnet, dass** die Abtastfrequenz (f_{A}) zwischen 10 und 50 Hz beträgt.

9. Verfahren nach einem der vorhergehenden Ansprüche, **dadurch gekennzeichnet, dass** der wenigstens eine Schwellwert des Korrelationskoeffizienten (K) zwischen -0,4 und -0,6 liegt.

10. Verfahren nach Anspruch 1, **dadurch gekennzeichnet, dass** die Signalanalyse (50, 50') einen Vergleich mit wenigstens einem Referenzmuster umfasst.

11. Verfahren nach einem der vorhergehenden Ansprüche, **dadurch gekennzeichnet, dass** gleichzeitig Schlingerdämpfer (34, 34'), Schlingerdämpferkonsolen (32, 32') und sekundäre Feder-/Dämpfersysteme (25) überwacht werden.

12. Vorrichtung zur Fehlerüberwachung von Komponenten von Schienenfahrzeugen, mit dem Verfahren nach Anspruch 1 die Mittel zum Erfassen des Beschleunigungsverhaltens von wenigstens zwei, einem Wagenkasten (12) des Schienenfahrzeuges (10) zugeordneten Schlingerdämpferkonsolen (32, 32') umfasst, und mit Mitteln zum Korrelieren der Beschleunigungswerte von in Fahrtrichtung links und rechts des Wagenkastens (12) angeordneten Schlingerdämpferkonsolen (32, 32'), wobei ein Korrelationskoeffizient (K) mit wenigstens einem Schwellwert vergleichbar ist und bei Überschreiten wenigstens eines Schwellwertes eine Alarmmeldung (58) auslösbar ist, und mit Mitteln zur individuellen Signalanalyse (50, 50') der Beschleunigungssignale (38, 38').

13. Vorrichtung nach Anspruch 12, **dadurch gekennzeichnet, dass** an jeder Schlingerdämpferkonsole (32, 32') ein Beschleunigungsaufnehmer angeordnet ist, deren Signalausgänge mit einer Auswerteschaltung verbunden sind.

## Claims

1. A method for controlling errors in antirolling devices of a rail vehicle, wherein the acceleration behavior of at least two antirolling device consoles (32, 32') assigned to the body (12) of the rail vehicle (10) is monitored, and wherein the acceleration values are individually subjected to a signal analysis (50, 50'), **characterized in that** the acceleration values of antirolling device consoles (32, 32') arranged to the left and to the right of the body (12) of the rail vehicle (10) referred to its traveling direction are correlated, and **in that** a correlated coefficient (K) resulting thereof is compared with at least one threshold value and an alarm signal (58) is triggered if the at least one threshold value is exceeded.

2. The method according to Claim 1, **characterized in that** the correlation analysis takes place in successive time windows (t₁ - t₂).

3. The method according to one of the preceding claims, **characterized in that** the correlation analysis takes place in overlapping time windows (t₁ - t₂).

4. The method according to Claim 3, **characterized in that** the degree of overlap lies between 0 and 50%.

5. The method according to one of the preceding claims, **characterized in that** the signals (38, 38') are sampled with a sampling frequency (f_{A}) within the time windows (t₁ - t₂) .

6. The method according to Claim 5, **characterized in that** the sampling frequency (f_{A}) is variable.

7. The method according to one of the preceding claims, **characterized in that** the time window (t₁ - t₂) lies between 3 and 20 seconds.

8. The method according to one of the preceding claims, **characterized in that** the sampling frequency (f_{A}) lies between 10 and 50 Hz.

9. The method according to one of the preceding claims, **characterized in that** the at least one threshold value of the correlated coefficient (K) lies between -0.4 and -0.6.

10. The method according to Claim 1, **characterized in that** the signal analysis (50, 50') comprises a comparison with at least one reference sample.

11. The method according to one of the preceding claims, **characterized in that** antirolling devices (34, 34'), antirolling device consoles (32, 32') and secondary spring/damper systems (25) are simultaneously monitored.

12. A device for controlling errors in components of rail vehicles by means of the method according to Claim 1, with means for monitoring the acceleration behavior of at least two antirolling device consoles (32, 32') assigned to the body (12) of the rail vehicle (10), with means for correlating the acceleration values of antirolling device consoles (32, 32') arranged to the left and to the right of the body (12), wherein a correlated coefficient (K) is compared with at least one threshold value and an alarm signal (58) is triggered if at least one threshold value is exceeded, and with means for the individual signal analysis (50, 50') of the acceleration signals (38, 38').

13. The device according to Claim 12, **characterized in that** an acceleration sensor is assigned to each antirolling device console (32, 32'), wherein the signal outputs of said acceleration sensors are connected to an evaluation circuit.

## Revendications

1. Procédé de surveillance des défaillances de stabilisateurs antiroulis d'un véhicule ferroviaire, par lequel le comportement à l'accélération d'au moins deux consoles de stabilisateurs antiroulis (32, 32') associées à un caisson de wagon (12) du véhicule ferroviaire (10) est surveillé, les valeurs d'accélération subissent individuellement une analyse de signaux (50, 50'), **caractérisé en ce que** les valeurs d'accélération de consoles de stabilisateurs antiroulis (32, 32') disposées à gauche et à droite du caisson de wagon (12) dans le sens de circulation du véhicule ferroviaire (10) sont d'une part mises en corrélation et qu'un coefficient de corrélation (K) en résultant est comparé à au moins une valeur seuil et qu'en cas de dépassement de l'au moins une valeur seuil, un message d'alarme (58) est déclenché.

2. Procédé selon la revendication 1, **caractérisé en ce que** l'analyse de corrélation a lieu dans des fenêtres temporelles (t₁ - t₂) se succédant.

3. Procédé selon l'une quelconque des revendications précédentes, **caractérisé en ce que** l'analyse de corrélation a lieu dans des fenêtres temporelles (t₁ - t₂) se chevauchant.

4. Procédé selon la revendication 3, **caractérisé en ce qu'**un degré de chevauchement va de 0 à 50 %.

5. Procédé selon l'une quelconque des revendications précédentes, **caractérisé en ce que** les signaux (38, 38') sont balayés au cours des fenêtres temporelles (t₁ - t₂) à une fréquence de balayage (f_{A}).

6. Procédé selon la revendication 5, **caractérisé en ce que** la fréquence de balayage (fA) est modifiable.

7. Procédé selon l'une quelconque des revendications précédentes, **caractérisé en ce que** la fenêtre temporelle (t1 - t2) va de 3 à 20 secondes.

8. Procédé selon l'une quelconque des revendications précédentes, **caractérisé en ce que** la fréquence de balayage va de 10 à 50 Hz.

9. Procédé selon l'une quelconque des revendications précédentes, **caractérisé en ce que** l'au moins une valeur seuil du coefficient de corrélation (K) va de -0,4 à - 0,6.

10. Procédé selon la revendication 1, **caractérisé en ce que** l'analyse de signaux (50, 50') comprend une comparaison avec au moins un modèle de référence.

11. Procédé selon l'une quelconque des revendications précédentes, **caractérisé en ce que** sont surveillés en même temps les stabilisateurs antiroulis (34, 34'), les consoles de stabilisateurs antiroulis (32, 32') et les systèmes de ressort/d'amortisseur secondaires (25) .

12. Dispositif de surveillance des défaillances des composants de véhicules ferroviaires par le procédé de la revendication 1, qui comprend des moyens d'enregistrement du comportement à l'accélération d'au moins deux consoles de stabilisateurs antiroulis (32, 32') associées à un caisson de wagon (12) du véhicule ferroviaire (10) et des moyens de mise en corrélation des valeurs d'accélération de consoles de stabilisateurs antiroulis (32, 32') disposées à gauche et à droite du caisson de wagon (12) dans le sens de circulation, un coefficient de corrélation (K) étant comparable à au moins une valeur seuil et un message d'alarme (58) pouvant être déclenché en cas de dépassement d'au moins une valeur seuil, et des moyens d'analyse individuelle de signaux (50, 50') des signaux d'accélération (38, 38').

13. Dispositif selon la revendication 12, **caractérisé en ce que**, sur chaque console de stabilisateur antiroulis (32, 32'), est disposé un détecteur d'accélération dont les signaux de sortie sont reliés à un circuit d'exploitation.
